# FASCICULE DE BREVET EUROPEEN

(11) **EP 2 309 341 B1**
(45) Date de publication et mention de la délivrance du brevet: **01.04.2015**
(21) Numéro de dépôt: 10182231.0
(22) Date de dépôt: 29.09.2010
(51) Int. Cl.: F16H 55/17, G04B 13/02

(54) **Procédé de fabrication d'un mobile monté fou en matériau micro-usinable.**
Herstellungsverfahren einer Freilauf-Triebfeder aus mikro-bearbeitbarem Material
Manufacturing method of a loose-mounted wheel made from a micro-machinable material

(30) Priorité: 07.10.2009 EP 09172455
(43) Date de publication de la demande: 13.04.2011
(73) Titulaire: Nivarox-FAR S.A., 2400 Le Locle (CH)
(72) Inventeur: Cusin, Pierre, 1423, Villars-Burquin (CH); Thiébaud, Jean-Philippe, 1588, Cudrefin (CH)
(74) Mandataire: Couillard, Yann Luc Raymond

(56) Documents cités:
- EP-A1- 0 537 617
- EP-A1- 0 579 093
- EP-A1- 1 791 043
- EP-A1- 2 060 534
- WO-A2-2008/135817
- FR-A1- 2 064 009

## Description

### Domaine de l'invention

L'invention se rapporte à un mobile en matériau micro-usinable monté fou sur un axe monobloc et son procédé de fabrication. Plus précisément, l'invention se rapporte à un rouage comportant un tel mobile.

### Arrière plan de l'invention

Il est connu de réaliser des roues en silicium pour une pièce d'horlogerie. Cependant, la manipulation de tels mobiles n'est pas aisée et il n'est actuellement pas possible de fabriquer un mobile pour une pièce d'horlogerie monté fou sans risquer de le détériorer voire le briser.

Les documents EP 2 060 534, EP 0 537 617 et EP 1 791 043 présentent des exemples de fabrication de pièces horlogères.

### Résumé de l'invention

Le but de la présente invention est de pallier tout ou partie les inconvénients cités précédemment en proposant un procédé de fabrication d'un rouage dont au moins un des mobiles en matériau micro-usinable est monté fou.

A cet effet, l'invention se rapporte à un procédé de fabrication d'un rouage comportant les étapes suivantes :
a) se munir d'un substrat comportant une couche supérieure et une couche inférieure en matériau micro-usinable et solidarisées entre elles par une couche intermédiaire ;
b) graver au moins un motif dans la couche supérieure et la couche intermédiaire jusqu'à découvrir la couche inférieure afin de former au moins une première cavité appartenant à un premier mobile ;
c) recouvrir au moins le fond de ladite au moins une première cavité d'un revêtement électriquement conducteur ;
d) électroformer un matériau au moins dans le fond de ladite au moins une première cavité ;
e) graver un deuxième motif dans la couche inférieure jusqu'au revêtement dudit matériau électriquement conducteur afin de former au moins une deuxième cavité appartenant à un deuxième mobile ;
f) structurer une résine photosensible sur le dessous de la couche inférieure en formant un chemisage sur les parois de ladite au moins une deuxième cavité et au moins un évidement s'évasant coaxialement de ladite au moins une deuxième cavité ;
g) continuer l'électroformage débuté lors de l'étape d) afin de remplir ladite au moins une première cavité et commencer l'électroformage d'un matériau dans ladite au moins une deuxième cavité et ledit au moins un évidement afin de former un axe muni d'une collerette ;
h) retirer la résine photosensible ;
i) retirer la couche intermédiaire afin de désolidariser les premier et deuxième mobiles ;
j) libérer le rouage fabriqué du substrat.

Selon l'invention, on comprend qu'il est possible de fabriquer très précisément à partir d'un seul substrat le rouage expliqué ci-dessus selon des processus LIGA et DRIE qui sont entremêlés.

Conformément à d'autres caractéristiques avantageuses de l'invention :
- l'étape f) comporte également la phase k) : recouvrir au moins le fond dudit au moins un évidement d'un deuxième revêtement électriquement conducteur afin d'améliorer la formation de ladite collerette ;
- le procédé comporte, avant l'étape d), l'étape l) : monter une pièce sur le dessus du substrat afin de former au moins un autre évidement s'évasant coaxialement de ladite au moins une première cavité afin d'offrir un niveau de matériau électroformé au-dessus de la couche supérieure ;
- l'étape c) permet également de recouvrir au moins le fond dudit au moins un autre évidement dudit revêtement électriquement conducteur ;
- le procédé comporte, après l'étape c), l'étape m) : monter une tige dans ladite au moins une première cavité afin de former un trou dans le futur rouage ;
- comporte, avant l'étape g), l'étape n) : monter une tige dans ladite au moins une deuxième cavité afin de former un trou dans le futur rouage ;
- les étapes b) et e) comporte les phases de structuration d'au moins un masque de protection sur la couche à graver, de réalisation d'une attaque anisotropique de ladite couche selon les parties non recouvertes par ledit au moins un masque de protection et de retrait du masque de protection ;
- plusieurs rouages sont fabriqués sur le même substrat ;
- chaque revêtement comporte au moins une couche d'or ;
- les matériaux micro-usinables sont à base de silicium.

### Description sommaire des dessins

D'autres particularités et avantages ressortiront clairement de la description qui en est faite ci-après, à titre indicatif et nullement limitatif, en référence aux dessins annexés, dans lesquels :
- les figures 1 à 11 sont des représentations des étapes successives d'un procédé de fabrication d'un rouage selon un mode de réalisation de l'invention ;
- la figure 12 est une représentation en perspective d'un rouage selon un mode de réalisation de l'invention ;
- la figure 13 est une représentation de la dernière étape d'un procédé de fabrication d'un rouage selon une variante de l'invention ;
- la figure 14 est une représentation en perspective d'un rouage selon une variante de l'invention ;
- la figure 15 est un schéma fonctionnel d'un procédé de fabrication d'un rouage selon l'invention.

### Description détaillée des modes de réalisation préférés

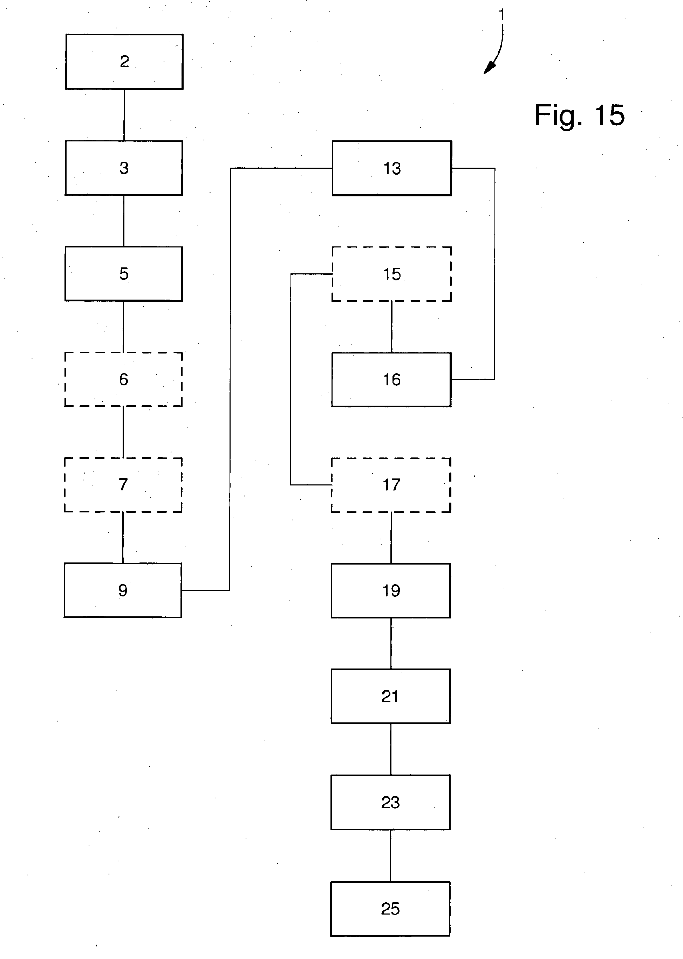

Comme visible à la figure 15, l'invention se rapporte à un procédé de fabrication 1 d'un rouage 51, 51' par exemple pour une pièce d'horlogerie. Le procédé de fabrication 1 comporte des étapes successives destinées à préparer un substrat 29 en matériaux micro-usinables comme, préférentiellement, des matériaux à base de silicium. Dans l'explicatif ci-dessous, les grandeurs respectives ne sont pas à la même échelle. En effet, certaines épaisseurs ont été majorées comme celles des revêtements 37 et 47 afin de rendre plus compréhensible ledit explicatif.

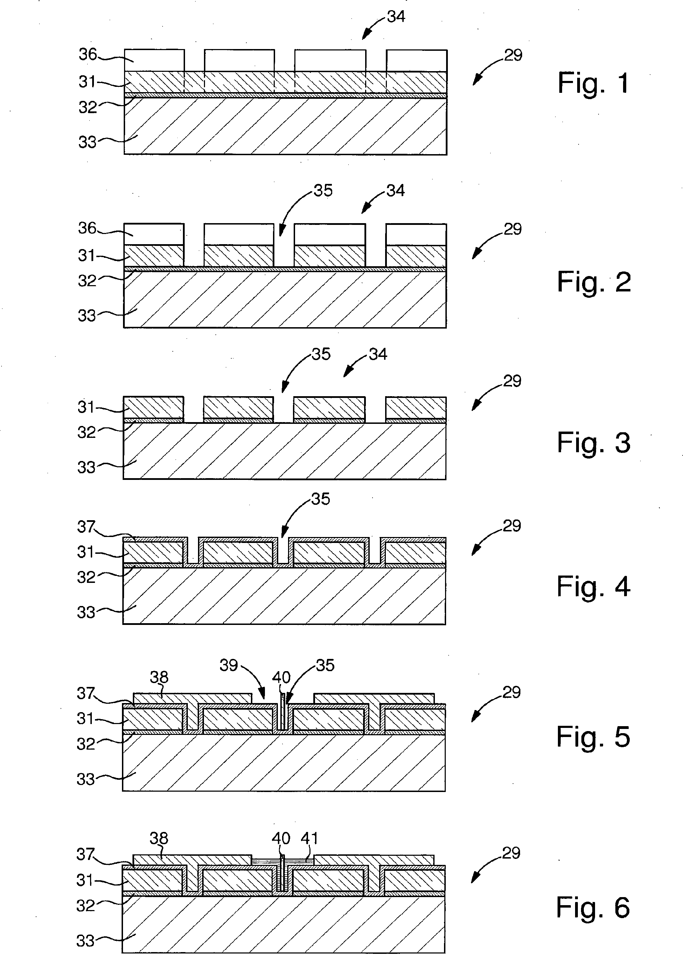

Une première étape 2 du procédé 1 consiste à se munir d'un substrat 9 comportant une couche supérieure 31 et une couche inférieure 33 en matériaux micro-usinables solidarisées entre elles par une couche intermédiaire 32 comme illustré à la figure 1.

Préférentiellement, le substrat 29 est un S.O.I. (abréviation très connue provenant des termes anglais « Silicon On Isulator »). Ainsi, la couche intermédiaire 32 est préférentiellement en dioxyde de silicium. De plus, les couches supérieure 31 et inférieure 33 sont en silicium cristallin.

Selon l'invention, le procédé 1 comporte une deuxième étape 3, destinée à graver au moins un motif 34 dans la couche supérieure 31 et la couche intermédiaire 32 jusqu'à découvrir partiellement le dessus de la couche inférieure 33.

La deuxième étape 3 consiste dans un premier temps à structurer au moins un masque 36 de protection sur la couche supérieure 31 comme illustré à la figure 1. Comme visible également à la figure 1, le masque 36 comporte au moins un motif 34 qui ne recouvre pas la couche supérieure 31. Un tel masque 36 peut, par exemple, être obtenu par photolithographie à l'aide d'une résine photosensible du type positif ou négatif.

Dans un deuxième temps, la couche supérieure 31 est gravée jusqu'à découvrir la couche intermédiaire 32 comme illustré à la figure 2. Selon l'invention, le gravage comporte, de manière préférée, une attaque sèche anisotropique du type gravage ionique réactif profond (DRIE). L'attaque anisotropique est effectuée dans la couche supérieure 31 selon le motif 34 du masque 36.

Dans un troisième temps, le motif 34 est prolongé dans la couche intermédiaire 32 par gravage jusqu'à découvrir partiellement le dessus de la couche inférieure 33. Selon l'invention, le gravage peut comporter une attaque chimique ou un gravage directionnel des parties découvertes de la couche 32.

Dans un quatrième temps, le masque 36 est retiré. Bien entendu, suivant la résistance du masque 36 au mode de gravage de la couche intermédiaire 32, le masque 36 peut être retiré avant ou après ce gravage.

Ainsi, comme visible à la figure 3, à la fin de la deuxième étape 3, les couches supérieure 31 et intermédiaire 32 sont gravées dans toute leur épaisseur respective d'au moins une cavité 35, permettant de former un premier mobile 55, 55' du futur rouage 51, 51'.

Dans une troisième étape 5, un revêtement 37 électriquement conducteur est déposé en recouvrant au moins le fond de chacune de ladite au moins une cavité 35. Dans l'exemple illustré à la figure 4, on peut voir que c'est l'ensemble supérieur du substrat 29 qui est revêtu. Comme il sera expliqué ci-dessous, les parois de ladite au moins une cavité 35 n'ont aucune nécessité à être revêtues, alors que la présence du revêtement sur le dessus de la couche supérieur 31 peut être nécessaire pour la variante de réalisation du rouage 51' prévue ci-dessous.

Préférentiellement, le revêtement 37 est obtenu par un dépôt en phase vapeur. Cependant, d'autres types de dépôt sont envisageables comme un dépôt chimique. De manière préférée, le revêtement 37 comporte au moins une couche d'or, éventuellement, déposée sur une couche d'accrochage en chrome.

Préférentiellement, afin de limiter les zones du futur électroformage, le procédé 1 peut comporter une étape 6 consistant à monter une pièce 38 sur le dessus du substrat 29. Cette étape 6 peut consister, par exemple, à structurer par photolithographie une résine photosensible du type positif ou négatif.

Avantageusement, cette étape 6 peut également autoriser la formation d'au moins un évidement 39 s'évasant coaxialement de ladite au moins une cavité 35 afin de réaliser ladite variante de réalisation du rouage 51' comme illustré à la figure 5.

De manière préférée, le procédé 1 peut comporter en même temps, avant ou après l'étape 6, une étape 7 consistant à monter une tige 40, comme illustré à la figure 5, à partir du fond de ladite au moins une cavité 35 afin de former directement un trou d'axe 54, 54' du rouage 51, 51' lors du futur électroformage. Cela présente l'avantage non seulement d'éviter d'avoir à usiner le rouage 51, 51' une fois l'électroformage terminé mais également de pouvoir réaliser n'importe quelle forme de section intérieure, de manière uniforme ou non, sur toute la hauteur du futur trou 54, 54'. Cette étape 7 peut également consister, par exemple, à structurer par photolithographie une résine photosensible du type positif ou négatif.

Le procédé 1 se poursuit ensuite avec l'étape 9 d'électroformage destinée à faire croître un dépôt électrolytique 41 au moins dans le fond de ladite au moins une cavité 35. Dans l'exemple illustré à la figure 6, représentant la variante de réalisation du rouage 51', on peut voir que le dépôt 41 croit aussi bien dans ladite au moins une cavité 35 que dans ledit au moins un évidement 39 autour de la tige 40.

Préférentiellement, l'étape 9 est arrêtée avant que le dépôt ne dépasse du dessus du substrat 29. Dans le cas de la première variante du rouage 51, le dessus du substrat 29 est le dessus de ladite au moins une cavité 35. Dans le cas de la deuxième variante du rouage 51', le dessus du substrat 29 est le dessus dudit au moins un évidement 39 comme illustré à la figure 6. On comprend pourquoi, dans cette deuxième variante, il peut être nécessaire que le dessus de la couche supérieure 31, c'est-à-dire le fond dudit au moins un évidement 39, comporte également le revêtement 37 formé lors de l'étape 5.

Selon l'invention, le procédé 1 se poursuit par l'étape 13 destinée à graver au moins un motif 44 dans la couche inférieure 33 jusqu'à découvrir le revêtement 37 et, éventuellement, le dépôt 41.

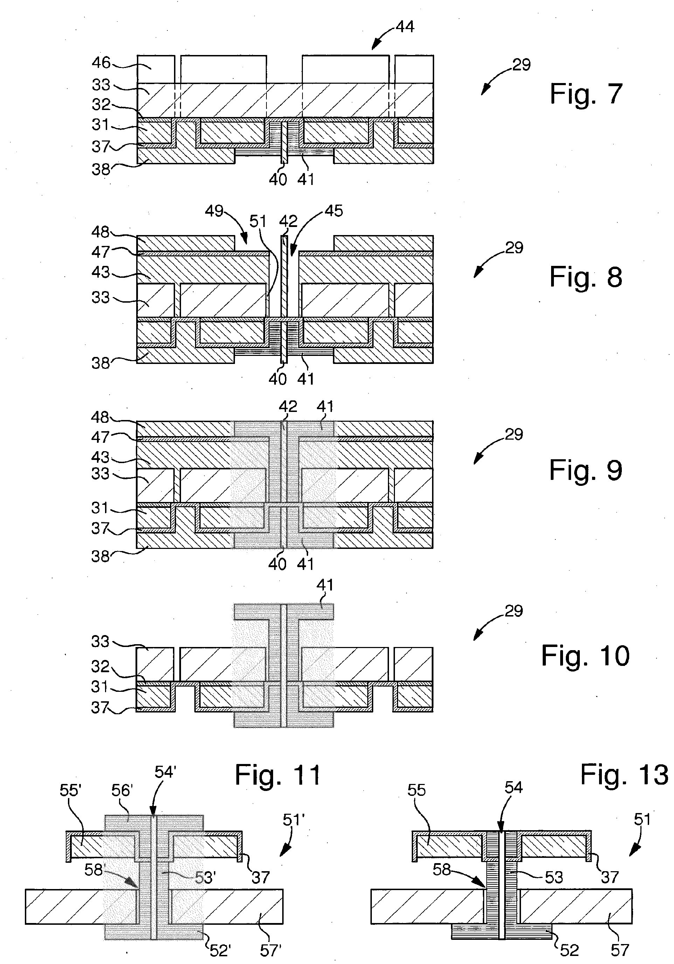

L'étape 13 consiste dans un premier temps à structurer au moins un masque 46 de protection sur la couche inférieure 33 comme illustré à la figure 7. Comme visible également à la figure 7, le masque 46 comporte au moins un motif 44 qui ne recouvre pas la couche inférieure 33. Un tel masque 46 peut, par exemple, être obtenu par photolithographie à l'aide d'une résine photosensible du type positif ou négatif.

Dans un deuxième temps, la couche inférieure 33 est gravée jusqu'à découvrir le revêtement 37 et, éventuellement, le dépôt 41. Selon l'invention, le gravage comporte, de manière préférée, une attaque sèche anisotropique du type gravage ionique réactif profond (DRIE). L'attaque anisotropique est effectuée dans la couche inférieure 33 selon le motif 44 du masque 46.

Dans un troisième temps, le masque 46 est retiré. Ainsi, à la fin de l'étape 13, la couche inférieure 33 est gravée dans toute son épaisseur d'au moins une deuxième cavité 45, permettant de former un deuxième mobile 57, 57' du futur rouage 51, 51 '.

Le procédé 1 comporte ensuite une étape 16 consistant à structurer une résine photosensible 43 sur le dessous de la couche inférieure 33 en formant un chemisage 51 sur les parois de ladite au moins une deuxième cavité 45.

Préférentiellement, dans une étape suivante 15, un revêtement 47 électriquement conducteur est déposé en recouvrant le dessus de la résine structurée 43. Par analogie avec les parois de ladite au moins une cavité 35, le chemisage 51 de ladite au moins une deuxième cavité 45 n'a pas non plus nécessité à être revêtu.

Préférentiellement, le revêtement 47 est obtenu par un dépôt en phase vapeur. Cependant, d'autres types de dépôt sont envisageables comme un dépôt chimique. De manière préférée, le revêtement 47 comporte au moins une couche d'or, éventuellement, déposée sur une couche d'accrochage en chrome.

Préférentiellement, afin de former au moins un deuxième évidement 49 s'évasant coaxialement de ladite au moins une deuxième cavité 45, le procédé 1 comporte une étape 17 consistant à monter une pièce 48 sur le dessous du substrat 29. Cette étape 17 peut consister, par exemple, à structurer par photolithographie une résine photosensible du type positif ou négatif.

De manière préférée, l'étape 17 du procédé 1 peut également consister à monter une tige 42, comme illustré à la figure 8, à partir du fond de ladite au moins une deuxième cavité 45 afin de former directement un trou d'axe 54, 54' du rouage 51, 51' lors du futur électroformage selon les mêmes avantages que ceux expliqué pour la tige 40. Préférentiellement, si les tiges 40 et 42 sont formées respectivement dans les cavités 35 et 45, elles sont alignées.

Le procédé 1 se poursuit ensuite avec une nouvelle étape 19 d'électroformage destinée à continuer le dépôt débuté lors de l'étape 9 afin de remplir ladite au moins une cavité 35 (et, éventuellement, ledit au moins un évidement 39) et commencer l'électroformage d'un matériau dans ladite au moins une deuxième cavité 45 et ledit au moins un deuxième évidement 49 afin de former un axe 53, 53' muni d'une collerette 52, 52' et, éventuellement, d'une deuxième collerette 54'.

Préférentiellement, à la fin de l'étape 19, le dépôt électrolytique 41 dépasse du dessus et du dessous du substrat 29. Un rodage est ensuite effectué afin de mettre le dépôt 41 au même niveau que celui du substrat 29 comme illustré à la figure 9.

Le procédé 1 se poursuit avec l'étape 21 de retrait de la résine 43, de la pièce 48 et, éventuellement, de la pièce 38 comme illustré à la figure 10. L'étape suivante 23 consiste à retirer la couche intermédiaire 32 afin de désolidariser les premier 55, 55' et deuxième 57, 57' mobiles formés respectivement dans la couche supérieure 31 et la couche inférieure 33. Selon l'invention, le retrait est réalisé par gravage qui peut consister, par exemple, en une attaque chimique. Enfin, dans l'étape finale 25, le rouage 51, 51' ainsi formé est libéré du substrat 29.

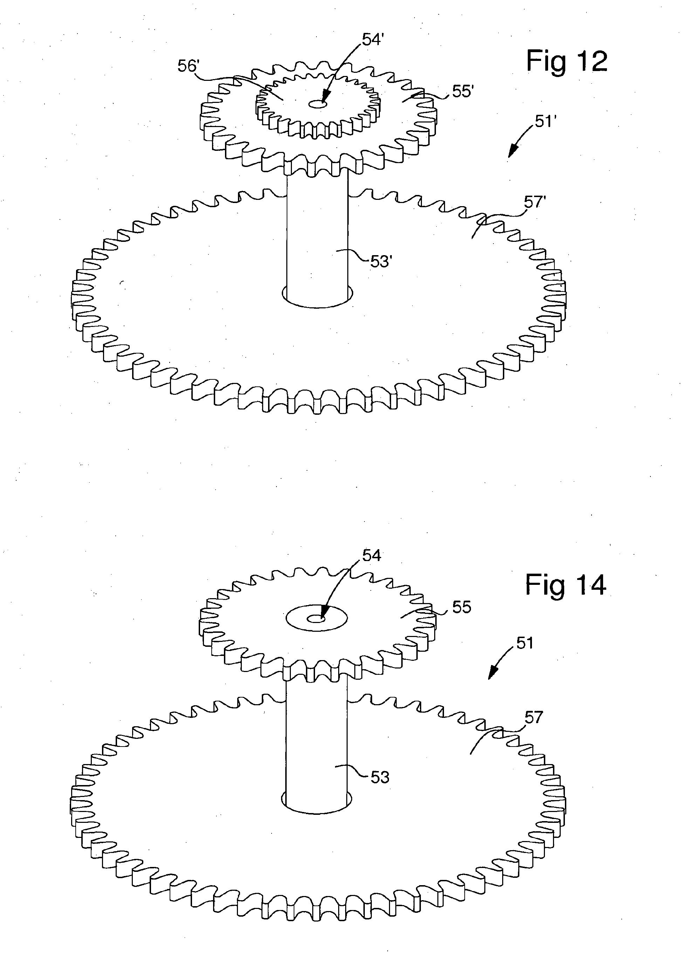

Ainsi, selon la première variante du procédé 1 illustrée aux figures 13 et 14, l'invention permet la réalisation d'un rouage composite 51 comportant un axe 53 dont une première extrémité est munie d'une collerette 52 venue de forme, un premier mobile 55 en matériau micro-usinable étant ajusté sur la deuxième extrémité de l'axe 53 et un deuxième mobile 57 en matériau micro-usinable qui est indépendant des mouvements dudit premier mobile et qui comporte une ouverture 58 dont la paroi est montée en vis-à-vis de l'axe 53 afin de monter fou le deuxième mobile 57 sur ladite première extrémité de l'axe 53. Comme illustré à ces figures 13 et 14, on voit que l'axe 53 comporte un trou 54 autorisant le chassage du rouage 51 contre un arbre ou un pivot.

Selon la deuxième variante du procédé 1 illustrée aux figures 11 et 12, l'invention permet la réalisation d'un rouage composite 51' comportant un axe 53' dont une première et une deuxième extrémités sont munies d'une collerette 52', 56' venues de forme. De plus, le rouage 51' comporte un premier mobile dont une première roue 55' en matériau micro-usinable est ajustée sur la deuxième extrémité de l'axe 53', solidaire et en recouvrement partiel de la deuxième collerette formant une deuxième roue 56' en matériau électroformé. Un deuxième mobile 57' en matériau micro-usinable qui est indépendant des mouvements dudit premier mobile et qui comporte une ouverture 58' dont la paroi est montée en vis-à-vis dudit axe afin de monter fou le deuxième mobile 57' sur ladite première extrémité de l'axe 53'. Comme illustré à ces figures 11 et 12, on voit que l'axe 53' comporte un trou 54' autorisant le chassage du rouage 51' contre un arbre ou un pivot.

Comme visible aux figures 11 et 13, le premier mobile 55, 55' peut comporter au moins partiellement un revêtement extérieur correspondant à la fine couche de revêtement 37 permettant d'améliorer la tribologie dudit premier mobile 55, 55'. De plus, préférentiellement, l'axe 53, 53' électroformé est en un matériau à faible frottement.

Bien entendu, la présente invention ne se limite pas à l'exemple illustré mais est susceptible de diverses variantes et modifications qui apparaîtront à l'homme de l'art. Ainsi, plusieurs rouages 51, 51' peuvent être fabriquées sur le même substrat 29 afin de réaliser une production en série de rouages 51, 51' qui ne sont pas forcément identiques entre eux. De même, on peut également envisager changer des matériaux à base de silicium par de l'alumine cristallisée ou de la silice cristallisée ou du carbure de silicium.

Il est également envisageable que les revêtements 37 et/ou 47 soient de natures différentes et/ou qu'ils soient déposés chacun selon des méthodes différentes que celles exposées ci-dessus. Il est également envisageable que ces revêtements 37 et/ou 47 soient inutiles par utilisation d'un matériau micro-usinable électriquement conducteur comme du silicium dopé et/ou que la résine 43 soit électriquement conductrice.

Enfin, la collerette 52, 52' au même titre que la collerette 54, 54' peut également comporter une denture. De plus, l'application du rouage 51, 51' n'est pas limitée à une pièce d'horlogerie.

## Revendications

1. Procédé de fabrication (1) d'un rouage (51, 51') comportant les étapes suivantes :
a) se munir (2) d'un substrat (29) comportant une couche supérieure (31) et une couche inférieure (33) en matériau micro-usinable et solidarisées entre elles par une couche intermédiaire (32) ;
b) graver (3) au moins un motif (34) dans la couche supérieure (31) et la couche intermédiaire (32) jusqu'à découvrir la couche inférieure (33) afin de former au moins une première cavité (35) appartenant à un premier mobile (55, 55') ;
c) recouvrir (5) au moins le fond de ladite au moins une première cavité (35) d'un revêtement (37) électriquement conducteur ;
d) électroformer (9) un matériau au moins dans le fond de ladite au moins une première cavité (35) ;
e) graver (13) un deuxième motif (44) dans la couche inférieure (33) jusqu'au revêtement (37) dudit matériau électriquement conducteur afin de former au moins une deuxième cavité (45) appartenant à un deuxième mobile (57, 57')
**caractérisé en ce que** le procédé de fabrication comporte en outre les étapes suivantes:
f) structurer (16) une résine photosensible (42, 43, 48) sur le dessous de la couche inférieure (33) en formant un chemisage (51) sur les parois de ladite au moins une deuxième cavité (45) et au moins un évidement (49) s'évasant coaxialement de ladite au moins une deuxième cavité (45) ;
g) continuer (19) l'électroformage débuté lors de l'étape d) afin de remplir ladite au moins une première cavité (35) et commencer l'électroformage (19) d'un matériau dans ladite au moins une deuxième cavité (45) et ledit au moins un évidement (49) afin de former un axe (53, 53') muni d'une collerette (52, 52') ;
h) retirer (21) la résine photosensible (38, 40, 42, 43, 48) ;
i) retirer (23) la couche intermédiaire (32) afin de désolidariser les premier (55, 55') et deuxième (57, 57') mobiles ;
j) libérer (25) le rouage (51, 51') fabriqué du substrat (29).

2. Procédé (1) selon la revendication précédente, **caractérisé en ce que** l'étape f) comporte également la phase suivante :
k) recouvrir (15) au moins le fond dudit au moins un évidement (49) d'un deuxième revêtement (47) électriquement conducteur afin d'améliorer la formation de ladite collerette.

3. Procédé (1) selon la revendication 1 ou 2, **caractérisé en ce qu'**il comporte, avant l'étape d), l'étape suivante :
l) monter une pièce (38) sur le dessus du substrat (29) afin de former au moins un autre évidement (39) s'évasant coaxialement de ladite au moins une première cavité (35) afin d'offrir un niveau de matériau électroformé au-dessus de la couche supérieure (31).

4. Procédé (1) selon la revendication précédente, **caractérisé en ce que** l'étape c) permet également de recouvrir au moins le fond dudit au moins un autre évidement (39) dudit revêtement (37) électriquement conducteur.

5. Procédé (1) selon l'une des revendications précédentes, **caractérisé en ce qu'**il comporte, après l'étape c), l'étape suivante :
m)monter (7) une tige (40) dans ladite au moins une première cavité (35) afin de former un trou (54, 54') dans le futur rouage (51, 51').

6. Procédé (1) selon l'une des revendications précédentes, **caractérisé en ce qu'**il comporte, avant l'étape g), l'étape suivante :
n) monter (17) une tige (42) dans ladite au moins une deuxième cavité (45) afin de former un trou (54, 54') dans le futur rouage (51, 51').

7. Procédé (1) selon l'une des revendications précédentes, **caractérisé en ce que** les étapes b) et e) comporte les phases suivantes :
- structurer au moins un masque (36, 46) de protection sur la couche à graver (31, 33) ;
- réaliser une attaque anisotropique de ladite couche selon les parties non recouvertes par ledit au moins un masque de protection ;
- retirer le masque de protection.

8. Procédé (1) selon l'une des revendications précédentes, **caractérisé en ce que** plusieurs rouages (51, 51') sont fabriqués sur le même substrat (29).

9. Procédé (1) selon l'une des revendications précédentes, **caractérisé en ce que** chaque revêtement (37, 47) comporte au moins une couche d'or.

10. Procédé (1) selon l'une des revendications précédentes, **caractérisé en ce que** les matériaux micro-usinables sont à base de silicium.

## Patentansprüche

1. Verfahren (1) zum Herstellen eines Gangwerks (51, 51'), das die folgenden Schritte umfasst:
a) Bereitstellen (2) eines Substrats (29), das eine obere Schicht (31) und eine untere Schicht (33) aus einem mikrobearbeitbaren Material aufweist, die über eine Zwischenschicht (32) aneinander befestigt sind;
b) Ätzen (3) wenigstens eines Musters (34) in die obere Schicht (31) und in die Zwischenschicht (32), bis die untere Schicht (33) freigelegt ist, um wenigstens einen ersten Hohlraum (35), der zu einem ersten beweglichen Element (55, 55') gehört, zu bilden;
c) Überziehen (5) wenigstens des Bodens des wenigstens einen ersten Hohlraums (35) mit einer elektrisch leitenden Beschichtung (37);
d) Elektroformen (9) eines Materials wenigstens auf dem Boden des wenigstens einen ersten Hohlraums (35);
e) Ätzen (13) eines zweiten Musters (44) in die untere Schicht (33) bis zu der Beschichtung (37) des elektrisch leitenden Materials, um wenigstens einen zweiten Hohlraum (45) zu bilden, der zu einem zweiten beweglichen Element (57, 57') gehört;
**dadurch gekennzeichnet, dass** das Herstellungsverfahren außerdem die folgenden Schritte umfasst:
f) Strukturieren (16) eines lichtempfindlichen Harzes (42, 43, 48) auf der Unterseite der unteren Schicht (33) durch Bilden einer Verkleidung (51) an den Wänden des wenigstens einen zweiten Hohlraums (45) und wenigstens einer Aussparung (49), die sich koaxial zu dem wenigstens einen zweiten Hohlraum (45) erweitert;
g) Fortsetzen (19) des Elektroformens, das im Schritt d) begonnen wurde, um den wenigstens einen ersten Hohlraum (35) zu füllen, und Beginnen des Elektroformens (19) eines Materials in dem wenigstens einen zweiten Hohlraum (45) und der wenigstens einen Aussparung (49), um einen Zapfen (53, 53') zu bilden, der mit einem Flansch (52, 52') versehen ist;
h) Abziehen (21) des lichtempfindlichen Harzes (38, 40, 42, 43, 48);
i) Abziehen (23) der Zwischenschicht (32), um das erste bewegliche Element (55, 55') und das zweite bewegliche Element (57, 57') zu trennen;
j) Freigeben (25) des Gangwerks (51, 51'), das auf dem Substrat (29) hergestellt worden ist.

2. Verfahren (1) nach dem vorhergehenden Anspruch, **dadurch gekennzeichnet, dass** der Schritt f) außerdem die folgende Phase umfasst:
k) Überziehen (15) wenigstens des Bodens der wenigstens einen Aussparung (49) mit einer zweiten elektrisch leitenden Beschichtung (47), um die Bildung des Flansches zu verbessern.

3. Verfahren (1) nach Anspruch 1 oder 2, **dadurch gekennzeichnet, dass** es vor dem Schritt d) den folgenden Schritt umfasst:
l) Anbringen eines Teils (38) über dem Substrat (29), um wenigstens eine andere Aussparung (39) zu bildern, die sich koaxial zu dem wenigstens einen ersten Hohlraum (35) erweitert, um über der oberen Schicht (31) eine Ebene aus elektrogeformtem Material bereitzustellen.

4. Verfahren (1) nach dem vorhergehenden Anspruch, **dadurch gekennzeichnet, dass** der Schritt c) außerdem ermöglicht, wenigstens den Boden der wenigstens einen anderen Aussparung (39) mit der elektrisch leitenden Beschichtung (37) zu überziehen.

5. Verfahren (1) nach einem der vorhergehenden Ansprüche, **dadurch gekennzeichnet, dass** es nach dem Schritt c) den folgenden Schritt umfasst:
m) Anbringen (7) eines Stifts (40) in dem wenigstens einen ersten Hohlraum (35), um in dem künftigen Gangwerk (51, 51') ein Loch (54, 54') zu bilden.

6. Verfahren (1) nach einem der vorhergehenden Ansprüche, **dadurch gekennzeichnet, dass** es vor dem Schritt g) den folgenden Schritt umfasst:
n) Anbringen (17) eines Stifts (42) in dem wenigstens einen zweiten Hohlraum (45), um in dem künftigen Gangwerk (51, 51') ein Loch (54, 54') zu bilden.

7. Verfahren (1) nach einem der vorhergehenden Ansprüche, **dadurch gekennzeichnet, dass** die Schritte b) und e) die folgenden Phasen enthalten:
- Strukturieren wenigstens einer Schutzmaske (36, 46) auf der zu ätzenden Schicht (31, 33);
- Ausführen eines anistropen Ätzens in dieser Schicht längs der Bereiche, die nicht mit der wenigstens einen Schutzmaske überzogen sind;
- Abziehen der Schutzmaske.

8. Verfahren (1) nach einem der vorhergehenden Ansprüche, **dadurch gekennzeichnet, dass** auf demselben Substrat (29) mehrere Gangwerke (51, 51') hergestellt werden.

9. Verfahren (1) nach einem der vorhergehenden Ansprüche, **dadurch gekennzeichnet, dass** jede Beschichtung (37, 47) wenigstens eine Goldschicht enthält.

10. Verfahren (1) nach einem der vorhergehenden Ansprüche, **dadurch gekennzeichnet, dass** die mikrobearbeitbaren Materialien Silicium als Basis haben.

## Claims

1. Method (1) of fabricating a gear train (51, 51') that includes the following steps:
a) taking (2) a substrate (29) that includes a top layer (31) and a bottom layer (33) made of micro-machinable material and secured to each other by an intermediate layer (32);
b) etching (3) at least one pattern (34) in the top layer (31) and the intermediate layer (32) until the bottom layer (33) is exposed, so as to form at least one first cavity (35) belonging to a first wheel set (55, 55');
c) coating (5) at least the bottom of said at least one first cavity (35) with an electrically conductive coating (37);
d) electroforming (9) a material, at least in the bottom of said at least one first cavity (35);
e) etching (13) a second pattern (44) in the bottom layer (33) as far as the coating (37) of said electrically conductive material, so as to form at least one second cavity (45) belonging to a second wheel set (57, 57') ;
**characterized in that** the method of fabricating further includes the following steps:
f) structuring (16) a photosensitive resin (42, 43, 48) on the bottom of the bottom layer (33), forming a sheathing (51) on the walls of said at least one second cavity (45) and at least one recess (49) that flares out coaxially from said at least second cavity (45);
g) continuing (19) the electroforming started in step d) so as to fill said at least one first cavity (35) and starting to electroform (19) a material in said at least one second cavity (45) and said at least one recess (49), so as to form an arbour (53, 53') fitted with a collar (52, 52');
h) removing (21) the photosensitive resin (38, 40, 42, 43, 48);
i) removing (23) the intermediate layer (32) so as to separate the first (55, 55') and second (57, 57') wheel sets; and
j) releasing (25) the fabricated wheel set (51, 51') from the substrate (29).

2. Method (1) according to the preceding claim, **characterized in that** step f) also includes the following phase:
k) coating (15) at least the bottom of said at least one recess (49) with a second electrically conductive coating (47) to improve the forming of said collar.

3. Method (1) according to claim 1 or 2, **characterized in that** prior to step d), it includes the following step:
l) mounting a part (38) on the top of the substrate (29) so as to form at least one other recess (39) that flares out coaxially from said at least one first cavity (35), to provide a level of electroformed material above the top layer (31).

4. Method (1) according to the preceding claim, **characterized in that** step c) also allows at least the bottom of said at least one other recess (39) to be coated with said electrically conductive coating (37).

5. Method (1) according to any of the preceding claims, **characterized in that**, after step c), it includes the following step:
m) mounting (7) a pin (40) in said at least one first cavity (35) to form a hole (54, 54') in the future gear train (51, 51').

6. Method (1) according to any of the preceding claims, **characterized in that**, prior to step g), it includes the following step:
n) mounting (17) a pin (42) in said at least one second cavity (45) so as to form a hole (54, 54') in the future gear train (51, 51').

7. Method (1) according to any of the preceding claims, **characterized in that** steps b) and e) include the following phases:
- structuring at least one protective mask (36, 46) on the layer to be etched (31, 33);
- performing an anisotropic etch of said layer over the parts that are not covered by said at least one protective mask;
- removing the mask.

8. Method (1) according to any of the preceding claims, **characterized in that** several gear trains (51, 51') are fabricated on the same substrate (29).

9. Method (1) according to any of the preceding claims, **characterized in that** each coating (37, 47) includes at least one gold layer.

10. Method (1) according to any of the preceding claims, **characterized in that** the micro-machinable materials are silicon-based.
